# EUROPÄISCHE PATENTSCHRIFT

(11) **EP 1 444 118 B1**
(45) Veröffentlichungstag und Bekanntmachung des Hinweises auf die Patenterteilung: **18.04.2007**
(21) Anmeldenummer: 02754303.2
(22) Anmeldetag: 02.07.2002
(51) Int. Cl.: B60S 1/24

(54) **SCHEIBENWISCHVORRICHTUNG, INSBESONDERE FÜR EIN KRAFTFAHRZEUG**
WINDSCREEN WIPER DEVICE, IN PARTICULAR FOR A MOTOR VEHICLE
SYSTEME D'ESSUIE-GLACE, DESTINE EN PARTICULIER A UN VEHICULE AUTOMOBILE

(30) Priorität: 07.11.2001 DE 10154640
(43) Veröffentlichungstag der Anmeldung: 11.08.2004
(73) Patentinhaber: ROBERT BOSCH GMBH, 70442 Stuttgart (DE)
(72) Erfinder: HAWIGHORST, Achim, 77830 Bühlertal (DE)
(86) Internationale Anmeldenummer: PCT/DE2002/002399
(87) Internationale Veröffentlichungsnummer: WO 2003/039922

(56) Entgegenhaltungen:
- EP-A- 1 067 029
- WO-A-94/21499
- WO-A-99/39946
- WO-A-99/43519
- DE-A- 2 636 419
- DE-A- 4 400 296
- DE-C- 19 944 565

## Beschreibung

### Stand der Technik

Die Erfindung betrifft eine Scheibenwischvorrichtung nach Gattung des unabhängigen Anspruches.

Es sind schon zahlreiche Scheibenwischvorrichtungen bekannt, die ein Antriebsaggregat mit einer Abtriebswelle aufweisen, die mit einer Kurbel drehfest verbunden ist. Bei diesen Vorrichtungen ist die Ankerwelle eines Elektromotors mit einer Schnecke versehen, die ein Zahnrad kämmt, das eine Abtriebswelle antreibt, die an einem Ende über einen Konus und eine Befestigungsmutter drehfest mit einer Motorkurbel verbunden ist. Das Zahnrad ist dabei in einem Gehäuse angeordnet, welches von der Abtriebswelle durchgriffen wird. Zur Lagerung ist in das Getriebegehäuse eine Exzenterbuchse eingesteckt, durch die die Abtriebswelle durchgesteckt wird und durch die die Abtriebswelle lateral verschiebbar ist.

Die Abtriebswelle selbst weist im Getriebegehäuse abgewandten Ende einen Konus auf, der von einem Gewinde abgeschlossen wird. Auf den Konus ist eine Kurbel gesteckt und mit einer Befestigungsmutter befestigt. Um das Axialspiel der Abtriebswelle zu begrenzen, weist die Abtriebswelle im Bereich zwischen Konus und Exzenterbuchse Rillen auf, so dass eine auf der Exzenterbuchse angeordnete Speednut das Axialspiel der Abtriebswelle hemmt.

Darüber hinaus ist aus der DE-A-2 636 419 bekannt, an einer umlaufend angetriebenen Welle durch ein Widerstandsschweißen eine Kurbel oder einen Hebel zu befestigen. Ein derartiges Verfahren für Motorkurbeln, Antriebskurbeln oder Befestigungsteile für Wischerarme in Wischanlagen ist auch aus der EP-A-1067 029 bekannt.

Weiterhin ist aus der DE-C-199 44 565 ein Reibschweißverfahren bekannt, mit dem Wischerwellen an Kurbeln befestigt werden können.

Darüber hinaus ist aus der WO-A-99/43 519 eine Scheibenwischvorrichtung bekannt, bei der eine Motorplatine, an der ein Antriebsaggregat befestigt ist, mit einer Rohrplatine, die die wesentlichen Komponenten der Scheibenwischvorrichtung trägt, durch eine Laserschweißverbindung verbunden ist.

### Vorteile der Erfindung

Die erfindungsgemäße Scheibenwischvorrichtung mit den Merkmalen des Hauptanspruches hat den Vorteil, dass die Abtriebswelle mit einer Kurbel drehfest verbunden ist und die Verbindung der Kurbel mit der Abtriebswelle als stoffschlüssige Verbindung, was zu einer stabilen Verbindung zwischen Kurbel und Abtriebswelle führt, die darüber hinaus kostengünstig zu realisieren ist, da mehrere Arbeitsschritte, wie beispielsweise Gewinde schneiden, Aufschrauben einer Befestigungsmutter, Abdrehen eines Konus eingespart werden. Dazu bietet sich insbesondere eine Laserschweißverbindung an.

Durch die in den Unteransprüchen aufgeführten Maßnahmen ergeben sich vorteilhafte Weiterbildungen und Verbesserungen der im Hauptanspruch angegebenen Merkmale.

Besonders vorteilhaft ist es, wenn die Abtriebswelle die Kurbel in ihrer vollen Dicke durchgreift und eine Endfläche aufweist, die im Wesentlichen bündig mit einer, dem Antriebsaggregat abgewandten Außenfläche der Kurbel abschließt. Auf diese Weise wird einerseits der Bauraumbedarf der Abtriebswelle-Kurbel-Kombination minimiert, andererseits kann die Laserschweißung leicht von der dem Antriebsaggregat abgewandten Seite aus realisiert werden. Darüber hinaus ergibt sich vorteilhaft eine größtmögliche Anlagefläche zwischen Kurbel und Abtriebswelle, wodurch eine sichere Laserschweißverbindung erzeugt wird.

Insbesondere ist es als vorteilhaft anzusehen, wenn die Abtriebswelle aus einem Gehäuse ragt und zwischen Kurbel und Gehäuse mindestens ein Distanzstück angeordnet ist, um das Axialspiel der Abtriebswelle zu begrenzen.

Dabei ist es von besonderem Vorteil, wenn die Abtriebswelle am Gehäuse in einer Buchse gelagert ist. Das Distanzstück kann sich dann vorteilhafter Weise an der Buchse und an der Kurbel abstützen.

Weiterhin vorteilhaft ist es, wenn die Buchse als Exzenterbuchse ausgebildet ist, um die Lateralposition der Abtriebswelle, die durch ein, von einer Schnecke gekämmtes Schneckenrad angetrieben ist, in montiertem Zustand auf einfache Weise eingestellt werden kann.

Ferner ist es besonders vorteilhaft, wenn das Distanzstück mit der Abtriebswelle drehfest verbunden ist, damit eine unkontrollierte Bewegung des Distanzstückes sowie ein erhöhten Verschleiß der Anlagefläche zwischen Distanzstück und Abtriebswelle vermieden wird.

Vorteilhafterweise ist die Verbindung zwischen Distanzstück und Abtriebswelle ebenfalls als Laserschweißverbindung ausgebildet. Dies ist kostengünstig zu realisieren und kann im selben Verarbeitungsschritt wie dem Anschweißen der Kurbel an die Abtriebswelle erfolgen.

Darüber hinaus ist es besonders vorteilhaft, wenn das Distanzstück dichtende Funktionselemente aufweist, da auf diese Weise weitere Bauteile, die zur Dichtung des Lagers benötigt werden, vermieden werden können.

Zeichnungen

Ein Ausführungsbeispiel der Erfindung ist in den Zeichnungen dargestellt und in der nachfolgenden Beschreibung näher erläutert. Es zeigen:
Figur 1 eine erfindungsgemäße Scheibenwischvorrichtung in schematischer Darstellung,
Figur 2 ein Antriebsaggregat einer Scheibenwischvorrichtung nach dem Stand der Technik,
Figur 3 ein Antriebsaggregat einer erfindungsgemäßen Scheibenwischvorrichtung in einer schematischen Seitenansicht und
Figur 4 einen Schnitt durch ein Distanzstück einer erfindungsgemäßen Scheibenwischvorrichtung.

### Beschreibung des Ausführungsbeispieles

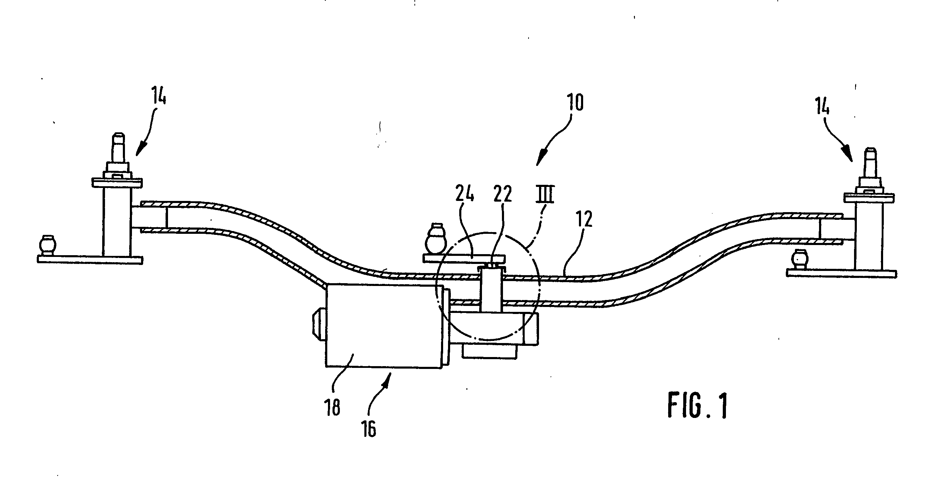

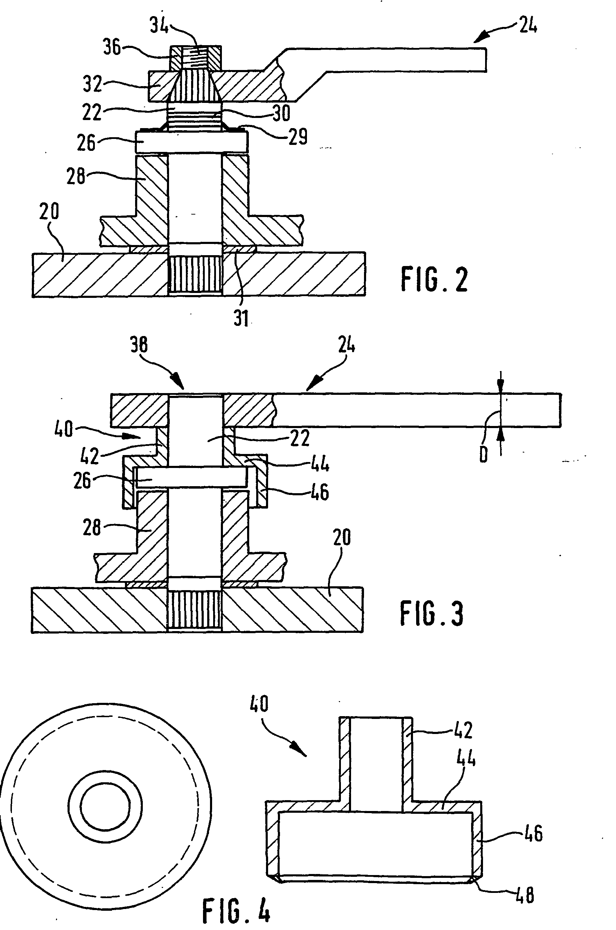

Figur 1 zeigt eine erfindungsgemäße Scheibenwischvorrichtung 10 in einer schematischen Darstellung. Diese besteht im Wesentlichen aus einem Trägerrohr 12, welches zwei Enden aufweist, an denen jeweils ein Wischerlager 14 angeordnet ist. Zwischen den beiden Wischerlagern 14 ist etwa in der Mitte der Längserstreckung des Trägerrohres 12 ein Antriebsaggregat 16 angeordnet. Es besteht im Wesentlichen aus einem Elektromotor 18, dessen nicht dargestellte Ankerwelle eine Schnecke aufweist, die ein Schneckenrad 20 (Figur 2) kämmt. Im Zentrum des Schneckenrades 20 sitzt eine Abtriebswelle 22, die mit dem Schneckenrad 20 drehfest verbunden ist. Ein Ende der Abtriebswelle 22 ist mit einer Kurbel 24 drehfest verbunden, die im Betrieb eine pendelnde oder rotierende Bewegung vollführt.

In Figur 2 ist ein Teil des Antriebsaggregates 16 mit der Kurbel nach dem Stand der Technik dargestellt. Das Schneckenrad 20 ist mit der Abtriebswelle 22 drehfest verbunden. Die Abtriebswelle 22 ist mittels einer Exzenterbuchse 26 in einem Gehäuse 28 des Antriebsaggregates 16 gelagert. Die Abtriebswelle 22 weist in dem Bereich, in dem sie aus der Exzenterbuchse 26 herausragt einen gerillten Bereich 30 auf, auf den eine Speednut 29 zur Begrenzung des Axialspieles aufgeschoben ist. An den gerillten Bereich 30 schließt sich ein Konusbereich 32 an, der durch einen zylindrischen Gewindebereich 34 abgeschlossen wird. Die Kurbel 24 ist auf den Konusbereich 32 der Abtriebswelle 22 aufgesteckt und mittels einer Mutter 36 auf der Abtriebswelle 22 befestigt.

In Figur 3 ist das Schneckenrad 20 mit der Abtriebswelle 22 und der Kurbel 24 einer erfindungsgemäßen Scheibenwischvorrichtung im Detail dargestellt. Die Abtriebswelle 22 ist an einem ihrer beiden Enden drehfest mit dem Schneckenrad 20 verbunden. Die Abtriebswelle 22 ragt über einen Federring 31 aus dem Gehäuse 28 heraus und ist über die Exzenterbuchse 26 im Gehäuse 28 gelagert. Die Kurbel 24 weist ein zylindrisches Loch auf, in das die Abtriebswelle 22 mit ihrem anderen Ende eingeschoben ist, so dass die Ebene der Kurbel, die dem Schneckenrad 20 und damit dem Antriebsaggregat 16 abgewandt ist, mit der Endfläche 38 der Abtriebswelle 22 eine Ebene bildet. Die Kurbel 24 ist mit der Abtriebswelle 22 über eine Laserschweißverbindung verbunden. Zwischen der Kurbel 24 und der Exzenterbuchse 26 ist ein Distanzstück 40 angeordnet, welches zur Einstellung des Axialspieles der Abtriebswelle 22 dient. Dieses Distanzstück 40 ist ebenso wie die Kurbel 24 drehfest mit der Abtriebswelle 22 verbunden und ebenfalls über eine Laserschweißverbindung mit der Abtriebswelle 22 verbunden.

Das Distanzstück 40 ist von im Wesentlichen rotationssymmetrischer Gestalt und weist drei Abschnitte mit jeweils unterschiedlichen Funktionen auf.

Ein erster Abschnitt 42 dient der eigentlichen Distanzeinstellung zwischen Kurbel 24 und Exzenterbuchse 26.

Dieser erste Abschnitt 42 ist auch der Abschnitt, der mit der Abtriebswelle 22 verschweißt ist. An diesen schließt sich ein zweiter Schulterabschnitt 44 an, der im Wesentlichen die Form einer Scheibe besitzt und die Anlagefläche des Distanzstückes 40 zur Exzenterbuchse 26 bildet. An diesen Schulterabschnitt 44 schließt sich ein rohrförmiger Dichtungsabschnitt 46 an, dessen Innendurchmesser etwa dem Außendurchmesser des Gehäuses-28 und der Exzenterbuchse 26 im Lagerbereich der Abtriebswelle 22 entspricht, so dass der Dichtungsabschnitt 46 das Eindringen von Schmutz in die Exzenterbuchse und damit das Lager der Abtriebswelle 22 verhindert.

In einer Variation der Erfindung ist es beispielsweise möglich, an den Dichtungsabschnitt 46 auch eine Gummilippe anzufügen, um die Dichtungseigenschaft weiter zu verbessern. In Figur 4 ist ein Querschnitt durch ein solches Distanzstück 40 dargestellt. Das Distanzstück 40 ist rotationssymmetrisch und weist den ersten, rohrförmigen Abschnitt 42 auf, an den sich unmittelbar der scheibenförmige Schulterabschnitt 44 anschließt. Dieser wird durch den rohrförmigen Dichtungsabschnitt 46 fortgesetzt. An diesem ist eine Dichtlippe 48 angesetzt, die die Abdichtung des Lagers am Gehäuse 28 verbessert. Diese Dichtlippe 48 kann natürlich auch über ein geeignetes Profil in den Dichtungsabschnitt 46 eingesetzt sein.

Weiterhin ist es möglich, das Distanzstück 40 auf der Abtriebswelle aufzurollieren, anstatt zu verschweißen oder in einer anderen Weise zu befestigen. Prinzipiell muss das Distanzstück 40 auch nicht mit der Abtriebswelle 22 verbunden sein. Beispielsweise ist es möglich, das Distanzstück 40 mit dem Gehäuse 28 zu verbinden, beispielsweise zu verprägen, so dass der rohrförmige, erste Abschnitt 42 die Abtriebswelle 22 mit lagert. In diesem Fall kann die Verbindung zwischen Distanzstück 40 und Gehäuse 28 jedoch erst am Ende der Montage durchgeführt werden, da ansonsten die Lateralverschiebung der Abtriebswelle 22 durch die Exzenterbuchse 26 nicht mehr möglich ist. Es kann jedoch auch der Durchmesser des rohrförmigen ersten Abschnittes 42 entsprechend größer gewählt werden, so dass der gesamte Verstellbereich der Exzenterscheibe 26 abgedeckt werden kann.

## Patentansprüche

1. Scheibenwischvorrichtung, insbesondere für ein Kraftfahrzeug, mit einem Antriebsaggregat (16), welches eine Abtriebswelle (22) aufweist, die mit einer Kurbel (24) drehfest verbunden ist, **dadurch gekennzeichnet, dass** die Verbindung der Kurbel (24) mit der Abtriebswelle (22) als Laserschweißverbindung ausgebildet ist.

2. Scheibenwischvorrichtung nach Anspruch 1, **dadurch gekennzeichnet, daß** die Abtriebswelle (22) die Kurbel (24) in ihrer vollen Dicke (D) durchgreift und eine Endfläche (38) aufweist, die im wesentlichen bündig mit einer dem Antriebsaggregat (16) abgewandten Außenfläche der Kurbel (24) abschließt.

3. Scheibenwischvorrichtung nach einem der vorhergehenden Ansprüche, **dadurch gekennzeichnet, daß** die Abtriebswelle (22) aus einem Gehäuse (28) ragt und zwischen Kurbel (24) und Gehäuse (28) mindestens ein Distanzstück (40) angeordnet ist.

4. Scheibenwischvorrichtung nach Anspruch 3, **dadurch gekennzeichnet, daß** die Abtriebswelle (22) am Gehäuse (28) in einer Buchse (26) gelagert ist und das Distanzstück (40) sich an der Buchse (26) abstützt.

5. Scheibenwischvorrichtung nach Anspruch 4, **dadurch gekennzeichnet, daß** die Buchse (26) als Exzenterbuchse ausgebildet ist.

6. Scheibenwischvorrichtung nach einem der Ansprüche 3 bis 5, **dadurch gekennzeichnet, daß** das Distanzstück (40) mit der Abtriebswelle (22) drehfest verbunden ist.

7. Scheibenwischvorrichtung nach Anspruch 6, **dadurch gekennzeichnet, daß** die Verbindung zwischen Distanzstück (40) und Abtriebswelle (22) als Laserschweißverbindung ausgebildet ist.

8. Scheibenwischvorrichtung nach einem der Ansprüche 3 bis 7, **dadurch gekennzeichnet, daß** das Distanzstück (40) dichtende Funktionselemente aufweist.

## Claims

1. Windscreen wiper device, in particular for a motor vehicle, with a drive unit (16) which has an output shaft (22) which is connected in a rotationally fixed manner to a crank (24), **characterized in that** the connection of the crank (24) to the output shaft (22) is designed as a laser welding connection.

2. Windscreen wiper device according to Claim 1, **characterized in that** the output shaft (22) reaches through the full thickness (D) of the crank (24) and has an end surface (38) which ends essentially flush with an outer surface of the crank (24), which outer surface faces away from the drive unit (16).

3. Windscreen wiper device according to one of the preceding claims, **characterized in that** the output shaft (22) protrudes out of a housing (28) and at least one spacer element (40) is arranged between crank (24) and housing (28).

4. Windscreen wiper device according to Claim 3, **characterized in that** the output shaft (22) is mounted on the housing (28) in a bushing (26) and the spacer element (40) is supported on the bushing (26).

5. Windscreen wiper device according to Claim 4, **characterized in that** the bushing (26) is designed as an eccentric bushing.

6. Windscreen wiper device according to one of Claims 3 to 5, **characterized in that** the spacer element (40) is connected in a rotationally fixed manner to the output shaft (22).

7. Windscreen wiper device according to Claim 6, **characterized in that** the connection between spacer element (40) and output shaft (22) is designed as a laser welding connection.

8. Windscreen wiper device according to one of Claims 3 to 7, **characterized in that** the spacer element (40) has sealing functional elements.

## Revendications

1. Dispositif d'essuie-glace, en particulier pour un véhicule automobile, comprenant un groupe d'entraînement (16), qui présente un arbre de sortie (22) solidaire en rotation avec un maneton (24),
**caractérisé en ce que**
la liaison entre le maneton (24) et l'arbre de sortie (22) est une soudure maneton au laser.

2. Dispositif d'essuie-glace selon la revendication 1,
**caractérisé en ce que**
l'arbre de sortie (22) traverse le maneton (24) sur toute son épaisseur (D) et présente une surface d'extrémité (38) qui se raccorde pour l'essentiel de façon alignée avec une surface extérieure du maneton (24) opposée au groupe d'entraînement (16).

3. Dispositif d'essuie-glace selon l'une des revendications précédentes,
**caractérisé en ce que**
l'arbre de sortie (22) dépasse d'un boîtier (28) et au moins une pièce d'écartement (40) est disposée entre le maneton (24) et le boîtier (28).

4. Dispositif d'essuie-glace selon la revendication 3,
**caractérisé en ce que**
l'arbre de sortie (22) est logé au niveau du boîtier (28) dans un maneton (26) et la pièce d'écartement (40) s'appuie contre le maneton (26).

5. Dispositif d'essuie-glace selon la revendication 4,
**caractérisé en ce que**
le maneton (26) est excentrique.

6. Dispositif d'essuie-glace selon l'une des revendications 3 à 5,
**caractérisé en ce que**
la pièce d'écartement (40) est solidaire en rotation avec l'arbre de sortie (22).

7. Dispositif d'essuie-glace selon la revendication 6,
**caractérisé en ce que**
la liaison entre la pièce d'écartement (40) et l'arbre de sortie (22) est une soudure au laser.

8. Dispositif d'essuie-glace selon l'une des revendications 3 à 7,
**caractérisé en ce que**
la pièce d'écartement (40) présente des éléments fonctionnels d'étanchéité.
